Europäisches Patentamt

European Patent Office

Office européen des brevets

(11) Publication number: **0 185 725**
**B1**

# EUROPEAN PATENT SPECIFICATION

(45) Date of publication of patent specification: **11.10.89**

(51) Int. Cl.⁴: **G 11 B 7/24, G 11 B 7/26**

(21) Application number: **85903065.2**

(22) Date of filing: **24.06.85**

(86) International application number:
**PCT/NL85/00023**

(87) International publication number:
**WO 86/00458 16.01.86 Gazette 86/02**

(54) **OPTICAL INFORMATION CARRIER WITH MOSSAIC STRUCTURE.**

(30) Priority: **22.06.84 NL 8401995**

(43) Date of publication of application:
**02.07.86 Bulletin 86/27**

(45) Publication of the grant of the patent:
**11.10.89 Bulletin 89/41**

(84) Designated Contracting States:
**DE FR GB NL**

(56) References cited:
**EP-A-0 107 379**
**GB-A-2 084 786**
**US-A-4 422 159**

**Patents Abstracts of Japan,volume 6,no.190
(M-159)(1068),29 September 1982 &
JP,A,5798394**

**Patents Abstracts of Japan,volume 6,no.249
(M-177)(1127) 8 December 1982 &
JP,A,57146691**

**Patents Abstracts of Japan,volume 6,no.129
(P-128)(1007),15 July 1982 & JP,A,5753843**

(73) Proprietor: **DOCdata N.V.**
**Venrayseweg 32**
**NL-5928 NZ Venlo (NL)**

(72) Inventor: **BEAUJEAN, Joseph, Marie, Elise**
**Pastoorstraat 11**
**NL-5971 BZ Grubbenvorst (NL)**

(74) Representative: **van der Beek, George Frans, Ir.
et al
Nederlandsch Octrooibureau Scheveningseweg
82 P.O. Box 29720
NL-2502 LS 's-Gravenhage (NL)**

(56) References cited:
**Patents Abstracts of Japan,volume 6,np.221
(P-153)(1099) 5 November 1982 &
JP,A,57123540**

Courier Press, Leamington Spa, England.

## Description

The invention relates to an optical information carrier comprising a substrate with an optically readable information structure, readable by means of a light beam, consisting of adjacent areas with different properties such that they have a different influence onto the scanning light beam and furthermore comprising a flat optically transparent layer onto the substrate, which layer is divided in two groups of areas, whereby the areas of one group have mutually the same optical refractive index and the refractive indexes of the areas of both groups differ at least 0.2 from each other. The invention relates furthermore to a method for fabricating such an optical information carrier.

Optical information carriers of this type are for instance known from the patent publication US 4,422,159.

It is amongst others known to create in a photosensitive layer of a photographic film local differences in optical refractive index which by interference cause an intensity variation of the transmitted light beam. In this way information can be stored in the form of a hologram. Also in this way optically active elements can be created functioning as a prism or a lens.

On the other hand it is known to create interference patterns by structuring the surface of a reflector of a transparent layer at a microscopic scale. Examples thereof are grating windows and optical discs, such as the Philips compact disc which comprises a reflective layer and is read out in a reflective mode or the video discs of Thomson-Brandt, which are read out in a transmission mode.

The fabrication of such structures appears to be not very simple in practice. Photographic films are gelatinous and are therefore mechanically vulnerable. Under the influence of moist the gelatinous layer easily becomes swollen, which rapidly will lead to a not allowable distortion of the information structure or optical structure stored within said layer. Therefore such photographical products should be handled very carefully. Also the obtainable differences in optical refractive index of the adjacent areas of the information structure are very small, in practice smaller than the transparent carrier of the compact disc comprises a relief structure corresponding to the information to be stored and said relief structure is covered in vacuum with a metallic layer. A lasting mechanical contact between the reflective metallic layer and the substrate, however, appears difficult to realize.

The above-mentioned US 4,422,159 describes an optical information carrier of the type mentioned in the first paragraph in which the adjacent areas are either absorptive or reflective. The basis structure before writing the information comprises a pattern of very small tiny columnar islands, separated by void volumes the dimensions of which are selected such that at the wave length of the impinging light absorption of the impinging light will occur. Information is written in this medium by locally melting the islands down, creating thereby a smooth surface area which is reflective.

An object of the invention is now to provide an optical information carrier functioning according to a different principle and structured in a different way avoiding thereby much of the above signal problems.

In agreement with said object the optical information carrier of the type mentioned in the heading paragraph is now characterized in that the layer is divided in correspondence with the information structure and the thickness of the optically transparent layer is selected such that dependent onto the wave length of the light of the scanning light beam an optical path length difference between the light beams scanning the areas of both groups is realized equal to or approximately equal to a half wave length or an odd multiple thereof.

During the reading of the optical information carrier according to the invention the scanning light beam will become extinguished or at least weakened at the edges of the areas, because part of the scanning light beam is propagating through an area of the one group and another part of the same light beam is propagating through an area of the other group. Because of the optical path length difference between the light beam parts at the interface between the different areas the light beam will become extinguished because of interference between both light beam parts. That implies that the contours of the areas will become visible as dark lines during the scanning process.

The optical information carrier according to the invention therefore can be used for storing and reproducing analogue information in the form of line patterns. One can thereby think on optical gratings, Fresnel patterns and other means, which are known themselves. On the other hand one can think on drawings, regular or irregular line structures or curves, code patterns such as bar code patterns or other information containing patterns.

The practical application area of the invention is therefore not restricted to the optical devices, holograms and video carriers or audio carriers, but comprises also labels, credit cards, micro fiches and such devices.

In a preferred embodiment the substrate of the optical information carrier is transparent. In that case the resulting product is an optical information carrier destined to be read out in a transmission mode.

The thickness of the optical transparent layer can be reduced significantly in case the substrate of the optical information carrier is reflective. In that case the information carrier has to be used of course in reflective mode.

Irrespective of the fact if the substrate is transparent or not the optical transparent layer is preferably at the other side covered by a transparent protective layer. Such a protective layer does not have any influence onto the reading process of the information.

In an embodiment, which is relatively simple to manufacture, the areas of the one group in the optical transparent layer are made of the same material as the material of the protective layer. In that case the areas of the other group have to be applied onto the substrate by means of a suitable process, whereafter the protective layer material can be poured into the resulting structure which is sufficient to complete the optical information carrier.

With reference to the fabrication of the optical information carrier it is in many cases preferred that the areas of the one group in the optical transparent layer are made of an anorganic or organic photoresist. Such optical information carriers can be fabricated by applying a photoresist layer with a suitable thickness onto the flat substrate, illuminating said photoresist layer selectively and thereafter etching the photoresist layer selectively such that the areas of the one group remain. Thereafter a transparent material can be poured into the resulting pattern which material forms the areas of the second group and also fills the space above the information layer, thereby functioning as protective layer.

However, it is also possible to use a fluid for the areas of the second group. In that case preferably a fluid with a relatively high refractive index is used, such that the whole resulting optically transparent information layer has only a very small thickness. Suitable fluids are arsenic tribromide, carbon disulfide, arsenic disulfide, thallium bromide or thallium jodide. Also fluids can be applied such as silicon oil and/or optical greases, comprising submicroscopically disperged solids with large refractive index, such as silicon, germanium or selenium/germanium to increase the refractive index of the fluid as a whole.

Preferably fluids are used which are also functioning as adhesive means between the optically transparent layer and the protective layer to be applied thereon.

The invention furthermore covers a method for fabricating an optcial information carrier of the above-indicated type. Said method is according to the invention characterized in that a layer of photoresist is applied to the flat substrate, the thickness of said layer corresponding to the desired thickness of the areas of the one group, which layer thereafter is selectively illuminated and etched such that the remaining parts of the photoresist layer are forming the areas of the one group, whereafter at least the intermediate spaces between said areas are filled with a material of which the refractive index differs at least 0.2 of the refractive index of the applied photoresist.

In an embodiment a resin is used as filling material which resin is applied with such a thickness that on the one hand the areas of the second group are formed whereas on the other hand simultaneously the protective layer is formed both above the areas of the first group as well as above the areas of the second group.

To prevent with certainty the development of air enclosures or gas enclosures in the areas of the second group a fluid can be used for filling said intermediate spaces, whereafter onto said fluid a solid protective layer is applied in vacuum.

The etching of the layer can be carried out according to various known methods. Relatively sharp bounded steep extending side walls of the areas of the one group and therewith sharply delimited contours in the information carring structure are obtained in case the etching process is carried out in a plasma.

The illumination of the layer is preferably carried out by means of a controlled electron beam.

Hereinafter the invention will be explained in more detail with reference to some embodiments thereof.

Figure 1 illustrates a first embodiment of an optical information carrier according to the invention destined to be read out in a reflective mode.

Figure 2 illustrates a second embodiment of an information carrier according to the invention destined to be read out in a transmission mode.

Figure 3 illustrates a third embodiment of an optical information carrier according to the invention.

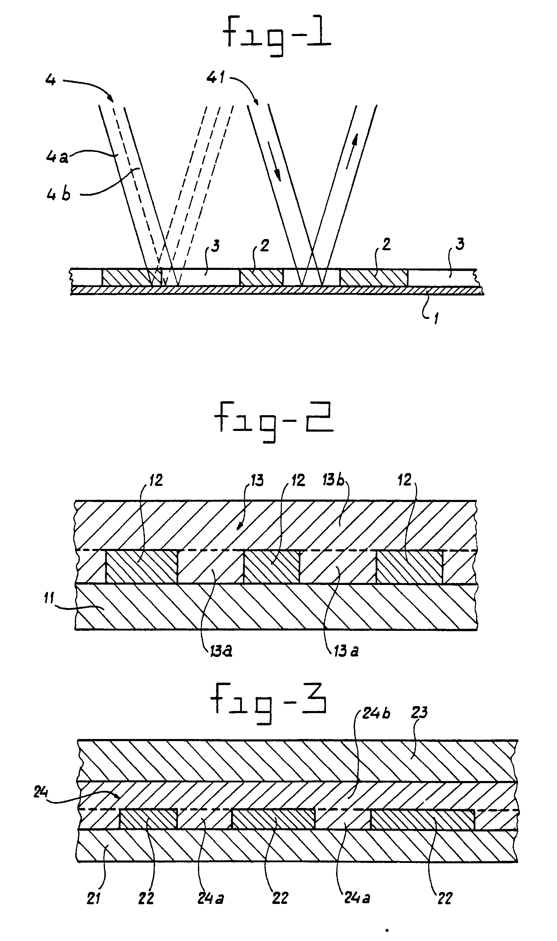

Figure 1 illustrates a first embodiment of an optical information carrier according to the invention. The information carrier comprises a reflective substrate onto which an optically transparent information carrying layer is present, which in this case contains on the one hand the areas 2 and on the other hand the areas 3. The areas 2 are for instance made of a photoresist material: The areas 3 form together with the areas 2 an integral layer onto the substrate 1.

As an example the optical information carrier of Figure 1 can be fabricated starting with a polished aluminium substrate 1. A layer of photoresist material is applied to said substrate 1 for instance by evaporating a layer of selenium/germanium or arsenic trisulfide. During the application of said layer the desired thickness of the areas 2 to be obtained is taken into account.

After applying the layer of photoresist said layer is selectively illuminated. For that purpose use can be made of a controlled electron beam in a known illuminating apparatus. Also illumination by means of ultraviolet light through a mask is possible. The illuminating wave length is dependent onto the sensitivity of the applied photoresist.

After illumination the photoresist is etched, whereby the not illuminated parts of the photoresist layer are removed. For this etching process use can be made of etching fluids which are themselves known. It is, however, preferred to use an etching plasma. During the etching process in a plasma the resulting shape of the side walls of the areas 2, in other words the under etching rate, etc., can be controlled with high accuracy.

The result of the etching process is a polished aluminium carrier 1 with thereon a pattern of areas 2. In the embodiment of Figure 1 said intermediate product is filled with a polyester resin 3, whereby care is taken that preferably the upper surface of the resulting resin layer is coexistent with the upper surface of the areas 2.

In case an organic photoresist is applied instead of an anorganic photoresist then preferably submicroscopically disperged silicon, germanium or selenium/germanium is introduced in the polyester resin to increase the refractive index difference between those areas.

At the left side of Figure 1 the situation during the reading of the information carrying structure is indicated. The impingeing light beam 4, generated by a not illustrated light source, propagates through the transparent information carrying layer 2, 3 and is reflected by the substrate 1 to a not illustrated light receiver. If, as is illustrated, the light beam impinges onto the transition between two areas 2 and 3 then the part 4a of the light beam will propagate along an optical path which as result of the selected materials for the areas 2 and 3 differs a half wave length or an odd multiple thereof from the path through which the part 4b of the light beam is propagating. The result thereof is that the parts 4a and 4b of the light beam will cause extinction of each other so that in fact no light is reaching the light receiver.

If, however, the light beam is impingeing onto one of the areas 2 or 3, as is indicated at the right side of the Figure by means of the light beam 4', then the receiver will recieve the reflected light beam.

Figure 2 illustrates a further embodiment of an optical information carrier according to the invention. Said optical information carrier comprises a transparent substrate 11, for instance a substrate of polyester terephthalate. Said polyester therephthalate can be supplied in the form of a plate or in the form of a foil. Onto said substrate a layer of a suitable photoresist is applied. Because the optical information carrier illustrated in Figure 2 is destined to be read out in a transmission mode in general a somewhat thicker layer of photoresist have to be applied because the areas 12 to be realized must have a somewhat larger thickness. Said thickness is of course dependent onto the difference in the optical refractive index between the material of the areas 12 and the index of the intermediate parts 13a of the optical information carrier.

After applying the photoresist layer said layer is selectively illuminated by means of a controlled laser beam or through a mask by means of a suitable light source. Thereafter the illuminated areas are of the photoresist layer or etched away so that again an intermediate product is obtained comprising the transparent carrier 11 with thereon the separate areas 12.

In this example thereafter the intermediate product is filled with a polyester resin which is doped with submicroscopically disperged germanium, silicon or selenium/germanium. In the illustrated example the resin layer extends above the actual optical information carrying layer such that said resin forms on the one hand the areas 13a belonging to the information carrying structure and functions on the other hand in the section 13b as protective layer for the information carrying structure.

It is remarked that also the carrier in Figure 1 can be converted by a protective layer, which protective layer does not have any influence onto the reading light beam.

Figure 3 illustrates a further embodiment of an optical information carrier according to the invention. Said embodiment comprises the substrate 21, for instance consisting of a polycarbonate foil. In the above already discussed manner the areas 22 are formed onto said foil, said areas belong to the optical information carrying transparent layer.

After the formation of the areas 22 the obtained intermediate product is wetted with a fluid such as arsenic tribromide with a refractive index of 1.82, carbon disulfide with a refractive index of 1.85, arsenic disulfide with a refractive index of 2.00, thallium bromide with a refractive index of 2.4 or thallium jodide with a refractive index of 2.8, or for instance silicon oil with therein disperged submicroscopical silicon, germanium or selenium/germanium. In case for the photoresist material of the areas 22 a material with low refractive index is selected then certainly the requirement, that the difference between the refractive index of the material of the areas 22 on the one hand and 24a on the other hand has to be larger than 0.2, is fulfilled. The wetting fluid therefore forms a layer 24 and onto said layer 24 a protective layer is applied, for instance in the form of a polycarbonate foil 23. Preferably said layer 23 is applied onto the fluid layer 24 in vacuum to prevent the development of eventual air bubbles between layers 23 and 24 and furthermore to enhance the adhesion between the layers.

Preferably a fluid with adhesive properties is used in the fluid layer 24. As ultimate step finally the complete structure is sealed at the edges, which is in the drawing not illustrated, to guarantee a long life of the product.

## Claims

1. Optical information carrier comprising a substrate (1; 11; 21) with an optically readable information structure, readable by means of a light beam, consisting of adjacent areas with different properties such that they have a different influence onto the scanning light beam (4, 41), and furthermore comprising a flat optically transparent layer onto the substrate, which layer is divided in two groups of areas, whereby the areas of one group have mutually the same optical refractive index and the refractive indexes of the areas of both groups differ at least 0.2 from each other, characterized in that the layer is divided in correspondence with the information structure (2, 3; 12, 13a; 22, 23a) and the thickness of the optically transparent layer is selected such that dependent onto the wave length of the light of the scanning light beam an optical path length difference between the light beams scanning the areas of both groups is realized equal to or approximately equal to a half wave length or an odd multiple thereof.

2. Optical information carrier according to claim 1, characterized in that the substrate (11) is transparent.

3. Optical information carrier according to claim 1, characterized in that the substrate (1) is reflective.

4. Optical information carrier according to one of the preceding claims, characterized in that the optically transparent layer is at the other side covered by a transparent protecting layer (13; 23), the material if which selected such that the areas of one group (13a) in the optically transparent layer are made of the same material as the protecting layer material.

5. Optical information carrier according to one of the preceding claims, characterized in that the areas of one group (2; 12; 22) are made of an organic or anorganic photoresist.

6. Optical information carrier according to claim 5, characterized in that the photoresist comprises selenium, germanium or arsenic trisulfide.

7. Optical information carrier according to one of the preceding claims, characterized in that the areas of one group are formed by a transparent curing mouldable fluid with therein submicroscopically disperged silicon, germanium or selenium.

8. Optical information carrier according to one of the preceding claims, characterized in that the areas of one group (24a) are formed by a fluid.

9. Optical information carrier according to the preceding claim 8, characterized in that the applied fluid is a silicon oil.

10. Optical information carrier according to claim 8 or 8, characterized in that the applied fluid comprises submicroscopically disperged silicon, germanium or selenium.

11. Optical information carrier according to claim 10, characterized in that the applied fluid is selected of the group arsenic tribromide, carbon disulfide, arsenic disulfide, thallium bromide or thallium jodide.

12. Optical information carrier according to one of the claims 8 until 11 inclusive, comprising a protective layer (23), characterized in that the fluid plays the role of adhesive means between the optically transparent layer and the protective layer.

13. Method for fabricating an optical information carrier according to one of the preceding claims, characterized in that a layer of photoresist is applied onto a flat substrate, which layer thereafter is selectively illuminated and etched such that the remaining part of the photoresist layer are forming the areas of the one group whereafter at least the intermediate spaces between said areas are filled with a material of which the refractive index differs at least 0,2 of the refractive index of the applied photoresist, whereby during the application of said photoresist layer the thickness thereof is selected such that dependent onto the wave length of the light of the scanning light beam an optical path length difference between the light beams scanning the areas of both groups is realized equal to or approximately equal to a half wave length or an odd multiple thereof.

14. Method according to claim 13, characterized in that the filling material consists of a resin which is applied with such a thickness that on the one hand the areas of the second group are formed whereas on the other hand simultaneously the protective layer above the areas of the one group as well as above the areas of the second group is formed.

15. Method according to claim 13, characterized in that a fluid is used for filling said intermediate spaces, whereafter onto said fluid a protective layer is applied in vacuum.

16. Method according to one of the claims 13 until 15 inclusive, characterized in that said layer is etched in a plasma.

17. Method according to one of the preceding claims 13 until 16 inclusive, characterized in that the layer is illuminated by means of a controlled electron beam.

**Patentansprüche**

1. Optischer Informationsträger mit einem Substrat (1; 11; 21) mit einer optisch lesbaren Informationsstruktur, die mittels eines Lichtstrahls lesbar ist, bestehend aus nebeneinanderliegenden Bereichen mit unterschiedlichen Eigenschaften, die so sind, daß sie den Abtast-Lichtstrahl (4, 41) unterschiedlich beeinflussen, und weiterhin einer flachen, optisch transparenten Schicht auf dem Substrat, wobei diese Schicht in zwei Gruppen von Bereichen unterteilt ist, wobei die Bereiche der einen Gruppe jeweils den gleichen Brechungsindex haben und die Brechungsindizes der Bereiche der beiden Gruppen sich wenigstens um 0,2 unterscheiden, dadurch gekennzeichnet, daß die Schicht entsprechend der Informationsstruktur (2, 3; 12, 13a; 22, 23a) geteilt ist und die Dicke der optisch transparenten Schicht so gewählt ist, daß abhängig von der Wellenlänge des Abtast-Lichtstrahls zwischen den Lichtstrahlen, die die Bereiche der beiden Gruppen abtasten, ein Unterschied der optischen Wellenlänge erzielt wird, der gleich oder annähernd gleich der halben Wellenlänge oder eines Vielfachen der Wellenlänge ist.

2. Optischer Informationsträger nach Anspruch 1, dadurch gekennzeichnet, daß das Substrat (11) transparent ist.

3. Optischer Informationsträger nach Anspruch 1, dadurch gekennzeichnet, daß das Substrat (1) reflektierend ist.

4. Optischer Informationsträger nach einem der vorstehenden Ansprüche, dadurch gekennzeichnet, daß die optisch transparente Schicht an der anderen Seite durch eine transparente Schutzschicht (13, 23) bedeckt ist, wobei das Material so ausgewählt ist, daß die Bereiche einer Gruppe (13a) in der optisch transparenten Schicht aus dem gleichen Material wie die Schutzschicht bestehen.

5. Optischer Informationsträger nach einem der vorstehenden Ansprüche, dadurch gekennzeichnet, daß die Bereiche der einen Gruppe (2; 12; 22) aus einem organischen oder anorganischen Fotolack hergestellt sind.

6. Optischer Informationsträger nach Anspruch 5, dadurch gekennzeichnet, daß der Fotolack Selen, Germanium oder Arsen-Trisulfid enthält.

7. Optischer Informationsträger nach einem der vorstehenden Ansprüche, dadurch gekennzeichnet, daß die Bereiche der einen Gruppe aus einem transparenten, gießbaren Ausbesserungsfluid mit submikroskopisch dispergiertem Silizium, Germanium oder Selen, hergestellt sind.

8. Optischer Informationsträger nach einem der vorstehenden Ansprüche, dadurch gekennzeichnet, daß die Bereiche der einen Gruppe (24a) durch ein Fluid hergestellt sind.

9. Optischer Informationsträger nach vorstehendem Anspruch 8, dadurch gekennzeichnet, daß das verwendete Fluid ein Silikonöl ist.

10. Optischer Informationsträger nach Anspruch 8 oder 9, dadurch gekennzeichnet, daß das verwendete Fluid submikroskopisch dispergiertes Silizium, Germanium oder Selen enthält.

11. Optischer Informationsträger nach Anspruch 10, dadurch gekennzeichnet, daß das verwendete Fluid aus der Gruppe Arsen-Tribromid, Kohlenstoff-Disulfid, Arsen-Disulfid, Thallium-Bromid oder Thallium-Jodid ausgewählt ist.

12. Optischer Informationsträger nach einem der Ansprüche 8 bis 11 mit einer Schutzschicht (23), dadurch gekennzeichnet, daß das Fluid die Rolle eines Klebstoffes zwischen der transparenten Schicht und der Schutzschicht spielt.

13. Verfahren zum Herstellen eines optischen Informationsträgers nach einem der vorstehenden Ansprüche, dadurch gekennzeichnet, daß auf einem flachen Substrat eine Schicht aus einem Fotolack aufgebracht wird, die dann wahlweise belichtet und so geätzt wird, daß der verbleibende Teil der Fotolackschicht die Bereiche der einen Gruppe bildet und dann wenigstens die Zwischenräume zwischen den Bereichen mit einem Material gefüllt werden, dessen Brechungsindex sich vom Brechungsindex des verwendeten Fotolacks um mindestens 0,2 unterscheidet, wobei während dem Aufbringen der Fotolackschicht deren Dicke so gewählt wird, daß abhängig von der Wellenlänge des Abtastlichtstrahls, zwischen den Lichtstrahlen, die die Bereiche beider Gruppen abtasten, ein Unterschied in der optischen Weglänge erzeugt wird, der gleich oder annähernd gleich der halben Wellenlänge oder einem Vielflachen der Wellenlänge ist.

14. Verfahren nach Anspruch 13, dadurch gekennzeichnet, daß das Füllmaterial aus einem Harz besteht, das mit einer solchen Dicke aufgetragen wird, daß einerseits die Bereiche der zweiten Gruppe gebildet werden, während andererseits gleichzeitig die Schutzschicht über den Bereichen der einen Gruppe sowie über den Bereichen der zweiten Gruppe erzeugt wird.

15. Verfahren nach Anspruch 13, dadurch gekennzeichnet, daß zum Füllen der Zwischenräume ein Fluid verwendet wird, und dann auf dem Fluid eine Schutzschicht unter Vakuum aufgebracht wird.

16. Verfahren nach einem der Ansprüche 13 bis 15, dadurch gekennzeichnet, daß die Schicht in einem Plasma geätzt wird.

17. Verfahren nach einem der vorstehenden Ansprüche 13 bis 16, dadurch gekennzeichnet, daß die Schicht mittels eines gesteuerten Elektronenstrahls beleuchtet wird.

**Revendications**

1. Support optique d'informations comportant un substrat (1; 11; 21) avec une structure d'informations lisible optiquement au moyen d'un faisceau lumineux, consistant en zones adjacentes de propriétés différentes de telle sorte qu'elles aient une influence différente sur le faisceau lumineux de balayage (4, 41), et comportant en outre une couche transparente optiquement plane sur le substrat, couche qui est divisée en deux groupes de zones, de telle sorte que les zones d'un groupe ont mutuellement le même indice de réfraction optique et que les indices de réfraction des zones des deux groupes diffèrent d'au moins 0,2 l'un de l'autre, caractérisé en ce que la couche est divisée en correspondance avec la structure d'informations (2, 3; 12, 13a; 22, 23a) et l'épaisseur de la couche transparente optiquement est choisie de telle sorte que selon la longueur d'onde de la lumière du faisceau lumineux de balayage, une différence de longueur de trajet optique entre les faisceaux lumineux balayant les zones des deux groupes est rendue égale ou approximativement égale à une demi-longueur d'onde ou à un multiple impair de celle-ci.

2. Support optique d'informations selon la revendication 1, caractérisé en ce que le substrat (11) est transparent.

3. Support optique d'informations selon la revendication 1, caractérisé en ce que le substrat (1) est réfléchissant.

4. Support optique d'informations selon une des revendications précédentes, caractérisé en ce que la couche optiquement transparente se trouve sur l'autre côté recouvert par une couche protectrice transparente (13; 23), dont le matériau est choisi de telle sorte que les zones d'un groupe (13a) dans la couche optiquement transparente sont constituées du même matériau que le matériau de la couche protectrice.

5. Support optique d'informations selon une des revendications précédentes, caractérisé en ce que les zones d'un groupe (2; 12; 22) sont constituées en un vernis photosensible organique ou inorganique.

6. Support optique d'informations selon la revendication 5, caractérisé en ce que le vernis photosensible comporte du trisulfure de sélénium, de germanium ou d'arsenic.

7. Support optique d'informations selon une des revendications précédentes, caractérisé en ce que les zones d'un groupe sont réalisées par un fluide moulable par cuisson transparent contenant du silicium, du germanium ou du sélénium dispersé sous forme de particules submicroscopiques.

8. Support optique d'informations selon une des revendications précédentes, caractérisé en ce que les zones d'un groupe (24a) sont constituées par un fluide.

9. Support optique d'informations selon la revendication 8, caractérisé en ce que le fluide appliqué est une huile aux silicones.

10. Support optique d'informations selon la revendication 8 ou 9, caractérisé en ce que le fluide appliqué comporte de silicium, du germanium ou du sélénium dispersé sous forme de particules submicroscopiques.

11. Support optique d'informations selon la revendication 10, caractérisé en ce que le fluide appliqué est choisi parmi le groupe comportant le ·tribromure d'arsenic, le bisulfure de carbone, le bisulfure d'arsenic, le bromure de thallium ou l'iodure de thallium.

12. Support optique d'informations selon une des revendications 8 à 11, comportant une couche protectrice (23), caractérisé en ce que le fluide joue le rôle de moyen adhésif entre la couche optiquement transparente et la couche protectrice.

13. Procédé de fabrication d'un support optique d'informations selon une des revendications précédentes, caractérisé en ce qu'une couche de vernis photosensible est appliquée sur un substrat plat, après quoi ladite couche est sélectivement éclairée et gravée de telle sorte que la partie subsistante de la couche de vernis photosensible forme les zones d'un groupe après quoi au moins les espaces intermédiaires entre lesdites zones sont remplis d'un matériau dont l'indice de réfraction diffère d'au moins 0,2 de l'indice de réfraction du vernis photosensible appliqué, de telle sorte que durant l'application de ladite couche de vernis photosensible l'épaisseur de celui-ci est choisie de telle sorte qu'en fonction de la longueur d'onde de la lumière du faisceau lumineux de balayage, une différence de longueur de trajet optique entre les faisceaux lumineux balayant les zones des deux groupes est rendue égale ou approximativement égale à une demi-longueur d'onde ou à un multiple impair de celle-ci.

14. Procédé selon la revendication 13, caractérisé en ce que le matérieu de remplissage consiste en une résine qui est appliquée selon une épaisseur telle que d'une part les zones du second groupe sont réalisées, tandis que d'autre part simultanément la couche protectrice au-dessus des zones d'un groupe ainsi qu'au-dessus des zones du second groupe est formée.

15. Procédé selon la revendication 13, caractérisé en ce qu'un fluide est utilisé pour remplir lesdits espaces intermédiaires, après quoi sur ledit fluide, une couche protectrice est appliquée sous vide.

16. Procédé selon une des revendications 13 à 15, caractérisé en ce que ladite couche est gravée dans un plasma.

17. Procédé selon une des revendications 13 à 16, caractérisé en ce que la couche est exposée au rayonnement d'un faisceau d'électrons commandé.

fig-1

fig-2

fig-3